# EUROPÄISCHE PATENTSCHRIFT

(11) **EP 3 275 731 B1**
(45) Veröffentlichungstag und Bekanntmachung des Hinweises auf die Patenterteilung: **19.02.2020**
(21) Anmeldenummer: 16182002.2
(22) Anmeldetag: 29.07.2016
(51) Int. Cl.: B60P 3/36

(54) **BEWOHNBARES KRAFTFAHRZEUG MIT TISCH-KUPPLUNG**
INHABITABLE MOTOR VEHICLE WITH TABLE COUPLING
VÉHICULE HABITABLE COMPRENANT UN COUPLAGE DE TABLE

(43) Veröffentlichungstag der Anmeldung: 31.01.2018
(73) Patentinhaber: REMIS Gesellschaft für Entwicklung und Vertrieb von technischen Elementen mbH Köln, 50829 Köln (DE)
(72) Erfinder: Dreßler, Wolfgang, 50739 Köln (DE); Hajredinaj, Semsi, 40227 Düsseldorf (DE)
(74) Vertreter: terpatent Patentanwälte ter Smitten Eberlein-Van Hoof Rütten Daubert

(56) Entgegenhaltungen:
- DE-U1-202010 011 878
- US-A- 3 712 662
- US-A- 5 934 726

## Beschreibung

Die Erfindung betrifft ein bewohnbares Kraftfahrzeug, wie ein Freizeit- oder Wohnmobil, mit einer Befestigungsvorrichtung zum wiederlösbaren Befestigen eines Tisches. Eine solche Befestigungsvorrichtung ist beispielsweise aus der US 3712662 A bekannt. Ferner betrifft die Erfindung ein Verfahren zum wiederlösbaren Befestigen eines Tisches an einem bewohnbaren Kraftfahrzeug. Bewohnbare Kraftfahrzeuge weisen üblicherweise einen Fahrzeuginnenraum auf, in dem beispielsweise eine Küche, eine Sitzgruppe und/oder eine Schlafgelegenheit angeordnet sind, und der durch zumindest eine Fahrzeugöffnung begehbar ist. Die Fahrzeugöffnung ist zwischen dem Fahrzeuginnenraum und einer Fahrzeugumgebung ausgebildet, weist einen Fahrzeugtürrahmen auf und ist mittels einer Fahrzeugtür verschließbar. Je nach Fahrzeugmodell kann die Fahrzeugöffnung an einer Fahrzeugseite oder einem Fahrzeugheck angeordnet und die Fahrzeugtür als eine Schwenk- oder Schiebetür ausgebildet sein. Insbesondere für einen Campingbetrieb des Fahrzeugs, bei dem das Fahrzeug zum Bewohnen zumeist für mehrere Tage abgestellt wird und auch die Fahrzeugumgebung, das heißt der Außenbereich des Fahrzeugs oftmals zu Wohnzwecken genutzt wird, ist es für die Bewohner des Fahrzeugs besonders komfortabel, wenn das Betreten des Fahrzeuginnenraums von der Fahrzeugumgebung - und umgekehrt - relativ einfach und problemlos, das heißt ohne großen Aufwand, erfolgen kann. Daher bleibt in dem Campingbetrieb des Fahrzeugs die Fahrzeugtür oftmals in einer Offenposition stehen und wird nicht für jedes Betreten separat geöffnet oder geschlossen.

Zur Vermeidung des Eindringens von Insekten bei offenstehender Fahrzeugtür, existieren verschiedene Insektenschutzeinrichtungen. Eine solche Insektenschutzeinrichtung ist zumeist nachträglich an dem Kraftfahrzeug befestigt und weist ein Insektenschutzgitter auf, mit dem die Fahrzeugöffnung bedarfsweise verschließbar ist. Dadurch kann eine Belüftung des Fahrzeuginnenraums stattfinden, ohne dass Insekten in den Fahrzeuginnenraum eindringen können. Ein solche Insektenschutzeinrichtung kann grundsätzlich aus mehreren einzelnen Insektenschutzgitter-Segmenten bestehen. Für einen gesteigerten Komfort sind auch Insektenschutzeinrichtungen mit einer integrierten Insektenschutztür bekannt. Um kleine - zumeist im Bereich eines Insektenschutzrahmens der Insektenschutzeinrichtung auftretende - Schlupflöcher für Insekten zu vermeiden, besteht die Insektenschutzeinrichtung möglichst aus einem einzigen Segment, welches vollflächig über die gesamte Fahrzeugöffunung ausgebereitet werden kann. Eine solche Insektenschutzeinrichtung ist beispielsweise aus der DE 20 2010 011 878 U1 bekannt.

Um den Außenbereich des Fahrzeugs bzw. die Fahrzeugumgebung, beispielsweise zum Camping, optimal nutzen zu können, ist an dem Kraftfahrzeug in der Regel zumindest eine Befestigungsvorrichtung zum wiederlösbaren Befestigen eines in der Fahrzeugumgebung angeordneten Tisches vorgesehen. Dadurch kann insbesondere die Standfestigkeit und Stabilität des Tisches durch die Fixierung gegenüber dem Fahrzeug erhöht werden. Insbesondere kann der Tisch, beispielsweise zum Essen oder Spielen, gegenüber dem Fahrzeug derart fixiert sein, dass ein unerwünschtes Wackeln oder Kippen des Tisches - wie es bei in der Fahrzeugumgebung frei-stehenden Tischen aufgrund eines unebenen Untergrundes oftmals vorkommt - vermieden werden kann. Der Tisch kann somit zu Campingzwecken außerhalb des Fahrzeugs platziert und an dem Fahrzeug befestigt werden, und zum Fahren des Fahrzeugs abgenommen und beispielsweise innerhalb des Fahrzeugs angeordnet oder verstaut werden.

Die Befestigungsvorrichtung weist in der Regel ein an dem Tisch angeordnetes Tisch-Kupplungsglied und zumindest ein fahrzeugseitig angeordnetes Fahrzeug-Kupplungsglied auf, wobei die Kupplunsglieder wiederlösbar miteinander kuppelbar sind. Das Fahrzeug-Kupplungsglied kann aus einem einzigen Teil oder aus mehreren Kupplungsgliedern bestehen und ist insbesondere in einem Bereich der Fahrzeugöffnung derart an dem Kraftfahrzeug angeordnet, dass der Tisch in einem gekuppelten Zustand der Kupplungsglieder sich von der Fahrzeugöffnung lateral in die Fahrzeugumgebung erstreckt. Dadurch kann der Tisch außerhalb des Fahrzeugs unmittelbar im Bereich eines Zugangs zum Fahrzeuginnenraum angeordnet sein und insbesondere die Distanz von dem Tisch zu dem Fahrzeuginnenraum so kurz wie möglich sein, was von vielen Campern als angenehm und komfortabel empfunden wird. Ferner kann die Befestigungsvorrichtung an einem mit dem Kraftfahrzeug verbundenen bzw. daran befestigten Bauteil, beispielsweise an einem Fahrzeuginnenraummöbel, angeordnet sein, und muss nicht zwingend unmittelbar an der Fahrzeugkarosserie angeordnet sein. Insbesondere kann die Fahrzeugkarosserie, wie die Außenwände, von der Befestigungsvorrichtung unberührt bleiben, so dass ein Eingriff in die Fahrzeugkarosserie und eine damit verbundene aufwendige Montage der Befestigungsvorrichtung vermieden werden können.

Problematisch an der Kombination einer die Fahrzeugöffnung verschließenden Insektenschutzeinrichtung und eines im Bereich der Fahrzeugöffnung an dem Kraftfahrzeug befestigten Tisches, ist die Tatsache, dass beide Einrichtungen, insbesondere das Insektenschutzgitter und die Tischbefestigungsvorrichtung, in demselben Bereich der Fahrzeugöffnung angesiedelt sind, und sich folglich in ihrer Anwendbarkeit grundsätzlich gegenseitig ausschließen. So kann entweder das Insektenschutzgitter die Fahrzeugöffnung verschließen oder der Tisch an dem Kraftfahrzeug gekuppelt sein.

Der Erfindung liegt daher die Aufgabe zugrunde, ein bewohnbares Kraftfahrzeug bereitzustellen, mit dem die im Stand der Technik auftretenden Nachteile überwunden werden, und bei dem insbesondere eine zeitgleiche Nutzung einer Insektenschutzeinrichtung und eines mit dem Fahrzeug gekuppelten Tisches ermöglicht ist.

Die Lösung der Aufgabe erfolgt erfindungsgemäß durch ein bewohnbares Kraftfahrzeug mit den Merkmalen des Anspruchs 1. Ferner wird die Erfindung durch ein Verfahren mit den Merkmalen des Anspruchs 19 gelöst. Vorteilhafte Ausgestaltungen und Weiterbildungen der Erfindung sind in den Unteransprüchen, der Beschreibung sowie den Figuren aufgeführt.

Erfindungsgemäß ist zumindest eines der Kupplungsglieder der Befestigungsvorrichtung derart ausgebildet, dass im gekuppelten Zustand der Kupplungsglieder zwischen dem Tisch und dem Fahrzeuginnenraum ein Zwischenraum ausgebildet ist, in dem das Insektenschutzgitter angeordnet ist. Dadurch kann die Fahrzeugöffnung auch in dem Bereich der Tischanordnung durch das Insektenschutzgitter verschlossen sein und eine effektive Abschottung des Innenraums gegen Insekten erzielt werden. Insbesondere kann die Insektenschutzeinrichtung mit einem einzigen zusammenhängenden Insektenschutzgitter die Fahrzeugöffnung ganzflächig verschließen, so dass die Gesamtanzahl der Insektenschutzrahmen bzw. Rahmen-Stoßflächen und somit auch die Anzahl möglicher Insekten-Schlupflöcher verringert sind.

Vorzugsweise ist der Tisch im gekuppelten Zustand der Kupplungsglieder an einem in dem Fahrzeuginnenraum angeordneten Fahrzeuginnenraummöbel befestigt, und der Zwischenraum zwischen dem Fahrzeuginnenraummöbel und dem Tisch ausgebildet. Das Fahrzeuginnenraummöbel kann grundsätzlich ein jedes Möbelstück, ein Teil eines Möbelstücks, ein Brett oder eine Konsole sein, welches in dem Fahrzeuginnenraum angeordnet und vorteilhafterweise an dem Fahrzeug befestigt ist. Das Fahrzeuginnenraummöbel ist bevorzugt als ein an dem Kraftfahrzeug dauerhaft befestigter Küchenblock ausgebildet, insbesondere als ein Küchenunterschrank. Das Fahrzeuginnenraummöbel ist zumindest teilweise in dem Bereich der Fahrzeugöffnung angeordnet. Dadurch kann an dem Fahrzeuginnenraummöbel ein zu der Fahrzeugöffnung zugewandtes Möbelteil ausgebildet sein, insbesondere eine Rückwand des Küchenunterschranks, an der zumindest eines der fahrzeugseitigen Kupplungsglieder zum wiederlösbaren Befestigen des Tisches angeordnet ist. Dadurch kann der Tisch bei geöffneter Fahrzeugtür von außerhalb des Kraftfahrzeugs, das heißt von der Fahrzeugumgebung aus, an dem an der Rückwand des Küchenunterschranks angeordneten Fahrzeug-Kupplungsglied in besonders einfacher und komfortabler Weise fixiert werden. Der Zwischenraum kann insbesondere parallel zu der Küchenschrankrückwand ausgebildet sein, so dass das Insektenschutzgitter zwischen der Küchenschrankrückwand und dem Tisch in einer im Wesentlichen vertikalen Ebene in der Fahrzeugöffnung angeordnet sein kann.

Vorzugsweise ist zumindest ein Kupplungsglied als ein Bolzenelement und zumindest ein anderes Kupplungsglied als ein Aufnahmeelement zur Aufnahme des Bolzenelements ausgebildet. Dadurch kann der Tisch in relativ einfacher Weise an dem Kraftfahrzeug befestigt werden. Unter einem Bolzenelement ist vorliegend eine jede Art einer stiftförmigen Befestigungseinrichtung zu verstehen, beispielsweise ein Stift, Splint, Bolzen, Niet oder eine Schraube. Unter einem Aufnahmeelement ist vorliegend eine jede Art einer zu dem Bolzenelement korrespondierenden Aufnahme zu verstehen, beispielsweise eine Hülse, Bohrung oder ein Gewinde. Demgemäß ist die Befestigungsvorrichtung bevorzugt als eine Steckkupplung ausgebildet, wobei das Bolzenelement als ein männlicher Steckerteil und das Aufnahmeelement als ein korrespondierender weiblicher Steckerteil ausgebildet ist. Vorteilhafterweise ist das Tisch-Kupplungsglied als ein Bolzenelement und das Fahrzeug-Kupplungsglied als ein Aufnahmeelement ausgebildet. Alternativ oder zusätzlich kann auch das Fahrzeug-Kupplungsglied ein Bolzenelement aufweisen. Besonders bevorzugt sind jeweils zwei Bolzenelemente und zwei Aufnahmeelemente vorgesehen. Insbesondere können ein erstes Bolzenelement mit einem ersten Aufnahmeelement, das beispielsweise an einem vertikalen Insektenschutzrahmen angeordnet ist, und das zweite Bolzenelement mit einem zweiten Aufnahmeelement, das beispielsweise an dem Fahrzeuginnenraummöbel befestigt ist, gekuppelt sein. Selbstverständlich ist jeweils auch eine umgekehrte Anordnung des Bolzenelements und Aufnahmeelements möglich.

Zur Kupplung der Kupplungsglieder kann das Bolzenelement sich durch eine an dem Insektenschutzgitter, an einem Insektenschutzrahmen oder an einer Griffleiste der Insektenschutzeinrichtung angeordneten Durchlassöffnung erstrecken. Vorteilhafterweise ist die Durchlassöffnung rund ausgebildet, so dass die Öffnung eine einfache Bohrung sein kann und dadurch kostengünstig herstellbar, unauffällig und platzsparend ist.

Die Durchlassöffnung kann durch ein separates Hülsenelement gebildet sein, das an dem Insektenschutzgitter befestigt bzw. eingearbeitet ist. Dadurch kann das Bolzenelement in relativ komfortabler Weise durch das Insektenschutzgitter hindurch geführt werden. Das Hülsenelement ist bevorzugt formsteif ausgebildet und weist einen dauerhaft gleichgroßen Durchlasskanal auf. Vorteilhafterweise ist der Durchlasskanal zumindest bei gespanntem Insektenschutzgitter im Wesentlichen senkrecht zur Erstreckungsebene des Insektenschutzgitters ausgerichtet, so dass das durch den Durchlasskanal gesteckte Bolzenelement sich ebenfalls im Wesentlichen senkrecht zur Erstreckungsebene des Insektenschutzgitters erstreckt.

Das Aufnahmeelement kann einen ersten Aufnahmeabschnitt zur Aufnahme des Bolzenelements und/oder einen zweiten Aufnahmeabschnitt zur Aufnahme des Hülsenelements aufweisen. Dadurch können sowohl das Hülsenelement als auch das Bolzenelement passgenau und in relativ einfacher Weise mit dem Aufnahmeelement gekuppelt sein. Insbesondere kann das Hülsenelement durch die Form des zweiten Aufnahmeabschnitt ausgerichtet und zumindest teilweise in den zweiten Aufnahmeabschnitt eingesetzt sein. Das Bolzenelement kann sich vorteilhafterweise durch das in dem zweiten Aufnahmeabschnitt befindliche Hülsenelement axial erstrecken und mit einem freien Ende in dem ersten Aufnahmeabschnitt mit dem Aufnahmeelement gekuppelt werden. Demgemäß sind das Hülsenelement, das Bolzenelement und die beiden Aufnahmeabschnitte vorteilhafterweise koaxial zueinander ausgebildet.

Zum vereinfachten Einsetzen des Hülsenelements in den zweiten Aufnahmeabschnitt weist das Aufnahmeelement bevorzugt einen Magneten, insbesondere einen Permanentmagneten, und das Hülsenelement ein eisenhaltiges bzw. ferromagnetisches Material auf. Dadurch kann in der näheren Umgebung des Aufnahmeelements von dem Magneten ein Magnetfeld erzeugt sein, durch welches das Hülsenelement aus der näheren Umgebung des Aufnahmeelements zu dem Aufnahmeelement angezogen, ausgerichtet und in den zweiten Aufnahmeabschnitt automatisch eingesetzt bzw. eingekuppelt werden kann. Dadurch ist eine besonders komfortable Kupplung des Hülsenelements mit dem Aufnahmeelement ermöglicht.

In einer Ausgestaltung der Erfindung ist zumindest ein Fahrzeug-Kupplungsglied als ein separat ausgebildetes Zwischen-Kupplungsglied ausgebildet, das als eine Schnittstelle zwischen einem ersten Kupplungsglied und einem zweiten Kupplungsglied angeordnet ist. Insbesondere kann das Zwischen-Kupplungsglied zwischen dem Tisch-Kupplungsglied und einem fahrzeugseitig - beispielsweise an einem Fahrzeugtürrahmen und/oder an der Insektenschutzeinrichtung - befestigten Fahrzeug-Kupplungsglied, wie dem Aufnahmeelement, angeordnet sein. Das Zwischen-Kupplungsteil kann insbesondere von beiden benachbarten Kupplungsgliedern lösbar sein, so dass das Zwischen-Kupplungsteil beispielsweise zum Schließen der Fahrzeugtür von dem Fahrzeug-Kupplungsglied abgenommen, separat verstaut und/oder zumindest in eine vorgegebene Position versetzt werden kann. Beispielsweise kann das Zwischen-Kupplungsteil in eine Verstau-Position eingeklappt oder eingeschoben werden. Dadurch ist die Befestigungsvorrichtung an verschiedenen Fahrzeugmodellen anwendbar.

Das Zwischen-Kupplungsglied kann als eine Tragschiene ausgebildet sein. Dadurch kann eine relativ hohe Stabilität des Zwischen-Kupplungsglieds erreicht werden. Besonders bevorzugt ist die Tragschiene über zumindest ein Bolzenelement mit dem Fahrzeug-Kupplungsglied, wie einem Gewinde in einer Bohrung, fahrzeugseitig gekuppelt und weist einen Einhängebereich auf, in den der Tisch mit einem korrespondierenden Tisch-Kupplungsglied, insbesondere einem Einhängeelement, in relativ einfacher Weise in die Tragschiene eingehängt bzw. eingehakt werden kann. Dazu können verschiedenen Einhänge-Positionen entlang der Tragschiene zum Kuppeln des Tisches mit der Tragschiene bereitgestellt werden. Vorteilhafterweise ist an der Tragschiene in Längserstreckung ein Langloch ausgebildet, in dem ein zweites Bolzenelement zum Fixieren der Tragschiene angeordnet ist. Dadurch kann die Tragschiene in einem durch das Langloch begrenzten Bereich mittels des Bolzenelements an einem korrespondierenden Aufnahmeelement gekuppelt werden. Besonders bevorzugt ist das verschiebbare Bolzenelement gegen ein Herausfallen aus dem Langloch gesichert, beispielsweise durch einen an dem Bolzenelement nach radial außen hervorstehenden Steg.

Das Zwischen-Kupplungsglied ist bevorzugt um eine Schwenkachse schwenkbar gelagert. Insbesondere das als Tragschiene ausgebildete Zwischen-Kupplungsglied kann dadurch zwischen einer Verstau-Position, in der die Tragschiene vertikal ausgerichtet ist, und einer KonsolenPosition, in der die Tragschiene zum Einhängen des Tisches horizontal ausgerichtet ist, geschwenkt werden. Die Schwenkachse ist vorteilhafterweise senkrecht zur Erstreckungsebene des Insektenschutzgitters angeordnet, so dass das Zwischen-Kupplungsglied beispielsweise von einem seitlichen Fahrzeugtürrahmen in den Bereich der Fahrzeugöffnung geschwenkt werden kann.

Vorteilhafterweise ist das Zwischen-Kupplungsglied auf der zur Fahrzeugumgebung zugewandten Seite des Zwischenraums angeordnet. Insbesondere das als Tragschiene ausgebildete Zwischen-Kupplungsglied ist dadurch zum Einhängen des Tisches von der Fahrzeugumgebung leicht zugänglich, so dass der Tisch mit dem Tisch-Kupplungsglied unabhängig von der Position des Insektenschutzgitters und in relativ komfortabler Weise in den Einhänge-Bereich der Tragschiene eingehängt werden.

Vorzugsweise sind das Zwischen-Kupplungsglied und/oder das Fahrzeug-Kupplungsglied U-förmig ausgebildet. Die U-förmige Ausgestaltung kann dabei einen Profil-Querschnitt oder die gesamte Formgebung des Zwischen-Kupplungsglieds bzw. des Fahrzeug-Kupplungsglieds betreffen. Beispielsweise weist das als Tragschiene ausgebildete Zwischen-Kupplungsglied im Querschnitt ein U-förmiges Profil auf. Dadurch kann die Tragschiene eine besonders hohe Formsteifigkeit und Stabilität aufweisen. Eine andere vorteilhafte Profilform des Zwischen-Kupplungsglieds und/oder des Fahrzeug-Kupplungsglied ist ein runder Querschnitt. Dadurch ist die Ausbildung einer Stoßkante vermieden. Alternativ oder zusätzlich kann das gesamte Fahrzeug-Kupplungsglied eine U-Form aufweisen, wobei die beiden freien Schenkel des U-Profils hierbei den Zwischenraum zur Anordnung der Insektenschutzeinrichtung umgeben können. Insbesondere kann der Zwischenraum zwischen den beiden Schenkel angeordnet sein, wobei einer der beiden Schenkel fahrzeuginnenraumseitig des Zwischenraums und der andere Schenkel fahrzeugumgebungsseitig des Zwischenraums angeordnet ist. Dadurch kann der fahrzeuginnenraumseitige Schenkel an dem Kraftfahrzeug befestigt sein, und an dem fahrzeugumgebungsseitigen Schenkel der Tisch gekuppelt sein. Vorteilhafterweise ist hierzu an dem fahrzeugumgebungsseitigen Schenkel ein Einhänge-Bereich zum Einhängen des Tisch-Kupplungsglieds ausgebildet. Eine die Schenkel verbindende Basis des U-Profils ist vorteilhafterweise im Bereich eines Fahrzeugtürrahmens angeordnet, so dass die Insektenschutzeinrichtung zumindest teilweise in dem einseitig offenen Spalt zwischen den Schenkeln des U-Profils - vorzugsweise verschiebbar - angeordnet sein kann und die Fahrzeugöffnung vollständig verschließen kann. Dadurch kann die Befestigungsvorrichtung besonders stabil und platzsparend aufgebaut sein.

Vorzugsweise weist die Insektenschutzeinrichtung einen das Insektenschutzgitter umgebenden Insektenschutzrahmen auf, der an dem Fahrzeugtürrahmen befestigt ist. Dadurch kann die Insektenschutzeinrichtung auch nachträglich an dem Kraftfahrzeug befestigt sein und insbesondere die gesamte Fahrzeugöffnung verschließen. Vorteilhafterweise weist der Insektenschutzrahmen einen einzigen aus zumindest drei Seitenteilen bestehenden Insektenschutzrahmen auf, wobei die Seitenteile einen formsteifen Rahmen bilden. Der formsteife Insektenschutzrahmen ist insbesondere korrespondierend zu der Fahrzeugöffnung ausgebildet, so dass der Insektenschutzrahmen in die Fahrzeugöffnung passgenau einsetzbar ist. Dadurch kann die Anordnung mehrerer einzelner Insektenschutzgitter vermieden werden und somit eine besonders effektive Abschottung des Innenraums gegen Insekten bewirkt werden.

Die Insektenschutzeinrichtung kann eine Insektenschutztür aufweisen, mit der die Fahrzeugöffnung bedarfsweise verschließbar ist. Die Fahrzeugtür kann drehbar oder verschiebbar gelagert sein und die Fahrzeugöffnung teilweise oder vollständig verschließen. Vorzugsweise ist die Insektenschutztür als eine Schiebetür ausgebildet. Dadurch kann die Fahrzeugöffnung durch die Insektenschutztür in besonders platzsparender und komfortabler Weise verschlossen oder geöffnet werden. Zum Öffnen und Schließen der Insektenschutztür kann eine bewegbare Rahmenleiste bzw. Griffleiste vorgesehen sein.

Im Falle einer als Schiebetür ausgebildeten Insektenschutztür weist die Insektenschutzeinrichtung zum Aufziehen oder Einschieben des Insektenschutzgitters bevorzugt zumindest eine in einer Führungsschiene verschiebbar gelagerte Griffleiste auf. Dadurch kann die Insektenschutztür besonders platzsparend aufgebaut und die Fahrzeugöffnung mit dem Insektenschutzgitter besonders schnell und komfortabel freigegeben oder verschlossen werden. Vorteilhafterweise ist die Griffleiste vertikal angeordnet und in einer horizontal ausgerichteten Führungsschiene gelagert, so dass die Griffleiste zum Aufziehen oder Einschieben des Insektenschutzgitters von einer Seite vor die Fahrzeugöffnung gezogen werden kann. In einer bevorzugten ersten Ausgestaltung kann die Griffleiste über die gesamte Breite der Fahrzeugöffnung verschoben werden, so dass eine einzige die gesamte Fahrzeugöffnung verschließbare Insektenschutztür ausgebildet ist. In einer Weiterentwicklung können mehrere verschiebbare Griffleisten vorgesehen sein, die jeweils eine Insektenschutztür bzw. einen Abschnitt einer Insektenschutztür bilden. Dadurch kann ein Durchgangsbereich der Fahrzeugöffnung zum Betreten des Fahrzeuginnenraums relativ flexibel und variabel angeordnet werden. Beispielsweise kann eine erste Griffleiste bis zu der Mitte der Fahrzeugöffnung verschoben und dort temporär fixiert sein und eine zweite Griffleiste als eine frei verschiebbare Insektenschutztür zum Öffnen oder zum Schließen des Durchgangsbereichs dienen. In diesem Fall können das fahrzeugseitige Kupplungsglied und/oder das Zwischenkupplungsglied beispielsweise an der ersten Griffleiste angeordnet sein, die im Bereich der Befestigungsvorrichtung temporär fixiert ist. Die zweite Griffleiste kann - bei der zuvor beschriebenen Anordnung der ersten Griffleiste - alternativ auch nicht als eine verschiebbare sondern als eine um eine seitliche Rahmenleiste drehbar gelagerte Insektenschutztür ausgebildet sein und in geschlossener Position der Insektenschutztür an der mittig angeordneten ersten Griffleiste anliegen.

Das Insektenschutzgitter ist bevorzugt faltbar ausgebildet, so dass das Insektenschutzgitter bei Verschieben der Griffleiste automatisch zusammengefaltet oder entfaltet wird. Insbesondere wird das Insektenschutzgitter bei einem Öffnen der Insektenschutztür durch ein Verschieben der Griffleiste in Richtung einer seitlichen Rahmenleiste in einen in der Rahmenleiste ausgebildeten einseitig offenen Schutzkasten faltend eingeschoben und verstaut. Bei einem Schließen der Insektenschutztür durch Verschieben der Griffleiste in Richtung von der seitlichen Rahmenleiste, in der das Insektenschutzgitter verstaut ist, wird das Insektenschutzgitter aus dem Schutzkasten heraus gezogen und automatisch entfaltet bis das Insektenschutzgitter in der geschlossenen Position der Insektenschutztür vollflächig über die Fahrzeugöffnung gespannt ist. Dadurch kann die Insektenschutzeinrichtung besonders platzsparend aufgebaut sein.

Vorteilhafterweise erstreckt sich das Insektenschutzgitter über die gesamte Fahrzeugöffnung. Insbesondere kann die Insektenschutzeinrichtung mit einem einzigen Insektenschutzgitter bzw. Gittersegment die Fahrzeugöffnung vollflächig verschließen. Dadurch kann die Gesamtanzahl der Seitenrahmen bzw. Stoßflächen und somit auch die Anzahl möglicher Insekten-Schlupflöcher verringert werden, und eine besonders effektive Abschottung des Innenraums gegen Insekten bewirkt werden.

Vorzugsweise ist der Tisch als ein Fahrzeuginnenraummöbel ausgebildet, das an einem zusätzlichen Fahrzeug-Kupplungsglied innerhalb des Fahrzeuginnenraums anordenbar und befestigbar ist. Insbesondere ist der Tisch ein Teil der Fahrzeuginnenausstattung und kann abwechselnd an zumindest zwei Positionen angeordnet und an dem Kraftfahrzeug befestigt werden, nämlich einerseits innerhalb des Fahrzeuginnenraums und alternativ außerhalb des Fahrzeugs.

Das erfindungsgemäße Verfahren zum wiederlösbaren Befestigen eines Tisches an einem bewohnbaren Kraftfahrzeug sieht die folgenden Schritte vor: Öffnen einer Fahrzeugtür zum Freilegen einer Fahrzeugöffnung zwischen einem Fahrzeuginnenraum und einer Fahrzeugumgebung, Schließen zumindest eines Teilbereichs der Fahrzeugöffnung durch Anordnen eines Insektenschutzgitters einer Insektenschutzeinrichtung, wobei während des Schließens, insbesondere bei einem Vorbeiziehen des Insektenschutzgitters an einem an einem Fahrzeuginnenraummöbel angeordneten Fahrzeug-Kupplungsglied, ein an dem Insektenschutzgitter angeordnetes ferromagnetisches Hülsenelement von dem Fahrzeug-Kupplungsglied magnetisch angezogen wird und mit dem Fahrzeug-Kupplungsglied automatisch gekuppelt wird, Schwenken eines als eine Tragschiene ausgebildeten Zwischen-Kupplungsglieds aus einer vertikalen Ausrichtung in eine horizontale Ausrichtung, Einführen eines an dem Zwischen-Kupplungsglieds beweglich gelagerten Bolzenelements durch das Hülsenelement in das Fahrzeug-Kupplungsglied, Einhängen des Tisches mit einem Tisch-Kupplungsglied auf das Zwischen-Kupplungsglied.

Nachfolgend wird die Erfindung anhand zwei bevorzugter Ausführungsformen unter Bezugnahme auf die anliegenden Zeichnungen näher erläutert.

Es zeigen schematisch
Figur 1 ein bewohnbares Kraftfahrzeug mit einer ersten erfindungsgemäßen Ausgestaltung in perspektivischer Ansicht,
Figur 2 einen Ausschnitt des Kraftfahrzeugs in einer geschnittenen Draufsicht,
Figuren 3a und 3b jeweils einen Ausschnitt der Befestigungsvorrichtung in einer Schnittansicht, und
Figur 4 einen Ausschnitt eines bewohnbaren Kraftfahrzeugs mit einer zweiten erfindungsgemäßen Ausgestaltung in einer geschnittenen Draufsicht.

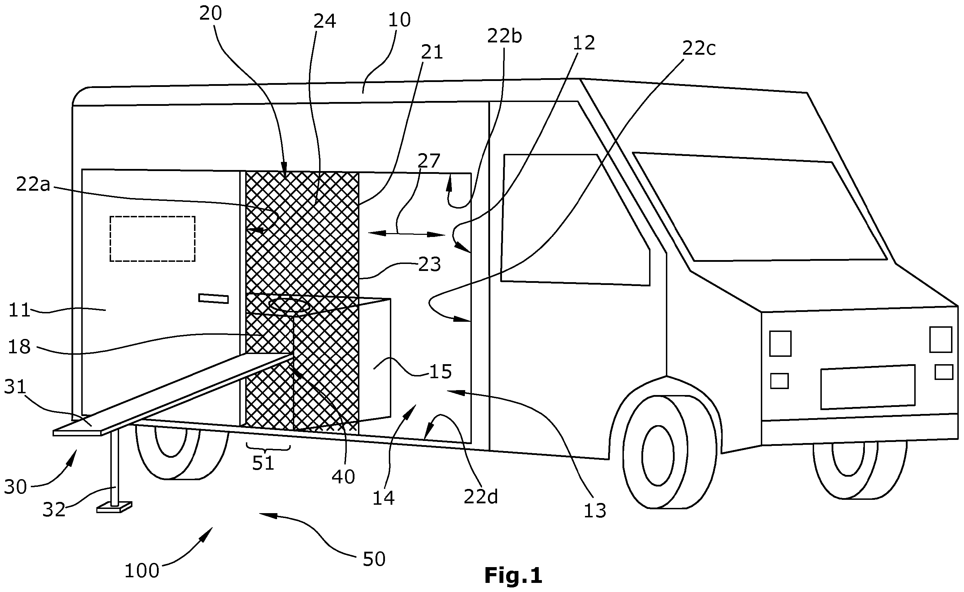

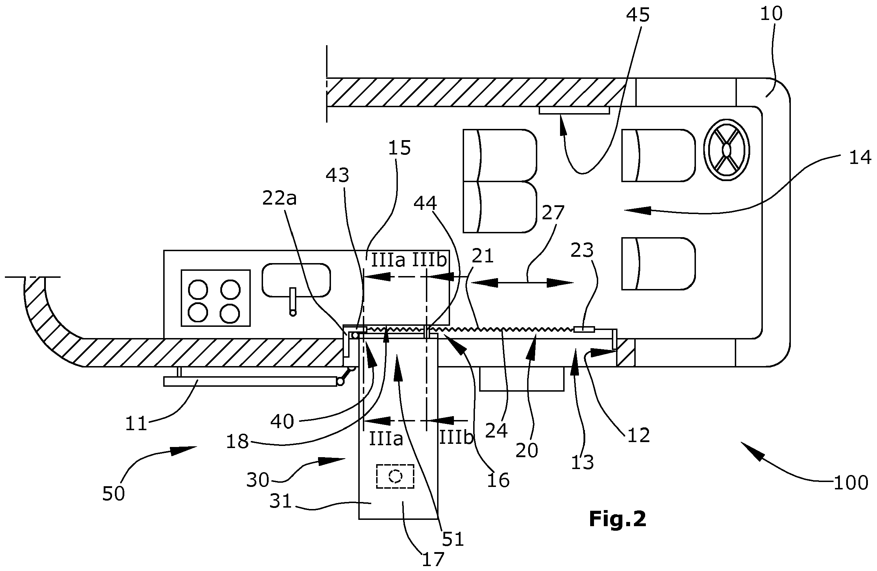

In den Figuren 1 und 2 ist ein Beispiel eines bewohnbaren Kraftfahrzeugs 10 mit einem bewohnbaren Fahrzeuginnenraum 14 gezeigt. Das Kraftfahrzeug 10 weist an einer Seite einen Fahrzeugtürrahmen 12 auf, der eine Aussparung bzw. Fahrzeugöffnung 13 umgibt. Die Fahrzeugöffnung 13 ist zwischen dem Fahrzeuginnenraum 14 und einer Fahrzeugumgebung 50 ausgebildet und mittels einer Fahrzeugtür 11, vorliegend einer Seitenschiebetür, verschließbar. In den Figuren 1 bis 4 ist die Fahrzeugtür 11 in einem geöffneten Zustand gezeigt, welches vorliegend eine Voraussetzung zum wiederlösbaren Befestigen eines Tisches 30 in der Fahrzeugumgebung 50 an dem Kraftfahrzeug 10 ist. Die Fahrzeugumgebung 50 betrifft hierbei einen das Kraftfahrzeug 14 umgebenden Bereich.

An der Fahrzeugöffnung 13 ist eine Insektenschutzeinrichtung 20 vorgesehen, die an dem Kraftfahrzeug 10 befestigt ist und ein Insektenschutzgitter 24 aufweist, mit dem die Fahrzeugöffnung 13 verschließbar ist. Vorliegend bedeckt das Insektenschutzgitter 24 lediglich etwa die Hälfte der Fahrzeugöffnung 13. Das Insektenschutzgitter 24 weist ein relativ dünnmaschiges Netz auf, durch das zwar Luft hindurch treten kann, nicht aber Insekten. Das Insektenschutzgitter 24 ist von einem Insektenschutzrahmen 22 umgeben, der im Bereich des Fahrzeugtürrahmens 12 an dem Kraftfahrzeug 10 befestigt ist.

Der Insektenschutzrahmen 22 weist zwei jeweils vertikal ausgerichtete und einander gegenüberliegend angeordnete Rahmenleisten 22a, 22c und zwei jeweils horizontal ausgerichtete und einander gegenüberliegend angeordnete Rahmenleisten 22b, 22d auf. Die Rahmenleisten 22a, 22b, 22c, 22d sind an einem die Fahrzeugöffnung 13 umgebenden, insbesondere umlaufenden Fahrzeugtürrahmen 12 befestigt. Die horizontalen Rahmenleisten 22b, 22d dienen jeweils als eine Führungsschiene für eine vertikal angeordnete Griffleiste 23, die zum Aufziehen oder Einschieben des Insektenschutzgitters 24 in den Führungsschienen verschiebbar gelagert ist. Das Insektenschutzgitter 24 kann dadurch im Wesentlichen in der Ebene der Fahrzeugöffnung 13 durch Verschieben der Griffleiste 23 entlang der Richtung 27 von der Rahmenstrebe 22a bis zur Rahmenstrebe 22c vollständig vor die Fahrzeugöffnung 13 aufgezogen werden und bildet somit eine verschiebbare Insektenschutztür 21, mit der die Fahrzeugöffnung 13 bedarfsweise geschlossen oder freigegeben werden kann. Grundsätzlich ist es möglich, zumindest eine weitere vertikal angeordnete Griffleiste zum Aufziehen oder Einschieben des Insektenschutzgitters 24 in den Führungsschienen 22b, 22d verschiebbar gelagert anzuordnen, was vorliegend jedoch nicht dargestellt ist. Das Insektenschutzgitter 24 ist faltbar ausgebildet und wird bei Verschieben der Griffleiste 23 - je nach Richtung 27 - automatisch entfaltet oder zusammengefaltet. In einer die Fahrzeugöffnung 13 vollständig freigebenden geöffneten Position der Insektenschutztür 21 befindet sich die Griffleiste 23 im Bereich der Rahmenleiste 22a, wobei das Insektenschutzgitter 24 gefaltet in einem an der Rahmenleiste 22a ausgebildeten und vorliegend nicht näher dargestellten Schutzkasten verstaut ist.

In dem Fahrzeuginnenraum 14 ist zumindest ein mit dem Kraftfahrzeug 10 fest verbundenes Fahrzeuginnenraummöbel 15 angeordnet, vorliegend ein Küchenunterschrank. Der Küchenunterschrank 15 ragt mit einem Abschnitt in einen Bereich 51 der Fahrzeugöffnung 13, so dass an dem Küchenunterschrank 15 eine zur Fahrzeugöffnung 13 zugewandte Möbelrückwand 18, insbesondere eine Küchenschrankrückwand freiliegt. An der Küchenschrankrückwand 18 ist eine Befestigungsvorrichtung 40 zum wiederlösbaren Befestigen eines Tisches 30 an dem Kraftfahrzeug 10 angeordnet.

Der Tisch 30 weist eine Tischplatte 31 auf, mit der der Tisch 30 in dem Bereich 51 der Fahrzeugöffnung 13 über die Befestigungsvorrichtung 40 an der freiliegenden Küchenschrankrückwand 18 wiederlösbar befestigt ist. In den Figuren 1 bis 4 ist der Tisch 30 folglich in einem gekuppelten Zustand 100 gezeigt, bei dem der Tisch 30 derart an dem Kraftfahrzeug 10 befestigt ist, dass der Tisch 30 sich von der Fahrzeugöffnung 13 in die Fahrzeugumgebung 50 erstreckt. Der Tisch 30 ist demgemäß für eine Nutzung im Wesentlichen außerhalb des Fahrzeugs 10 angeordnet und zur Erhöhung der Standfestigkeit und Stabilität über die Befestigungsvorrichtung 40 an dem Kraftfahrzeug 10 befestigt. Zur weiteren Stabilitätserhöhung weist der Tisch 30 ein Tischbein 32 auf, mit dem die Tischplatte 31 in der Fahrzeugumgebung 50 auf einem Boden abgestützt ist. Die Nutzung des Tisches 30 in der zuvor beschriebenen Art und Weise ist eine Sonderfunktion des Tisches 30, der üblicherweise ein Teil der Fahrzeuginnenausstattung ist und insbesondere innerhalb des Fahrzeugs 10 in dem Fahrzeuginnenraum 14 in einem Bereich einer Sitzbank angeordnet ist, was vorliegend jedoch nicht gezeigt ist. Dazu ist in dem Bereich der Sitzbank an dem Kraftfahrzeug 10 ein Kupplungsglied 45 zum wiederlösbar Befestigen des Tisches 30 innerhalb des Fahrzeuginnenraums 14 angeordnet.

Um sowohl den Tisch 30 an der Küchenschrankrückwand 18 befestigen zu können als auch die Insektenschutzeinrichtung 20 nutzen zu können, ist die Befestigungsvorrichtung 40 derart ausgebildet, dass in dem gekuppelten Zustand 100 des Tisches 30 an der Küchenschrankrückwand 18 zwischen dem Tisch 30 und dem Fahrzeuginnenraum 14 ein Zwischenraum 16 ausgebildet ist, in dem das Insektenschutzgitter 24 angeordnet ist. Vorliegend ist der Zwischenraum 16 zwischen dem Tisch 30 und der Küchenschrankrückwand 18 ausgebildet. Dadurch kann die Fahrzeugöffnung 13 auch in dem Bereich 51 des Tisches 30 durch das Insektenschutzgitter 24 verschlossen sein und eine effektive Abschottung des Innenraums 14 gegen Insekten erzielt werden.

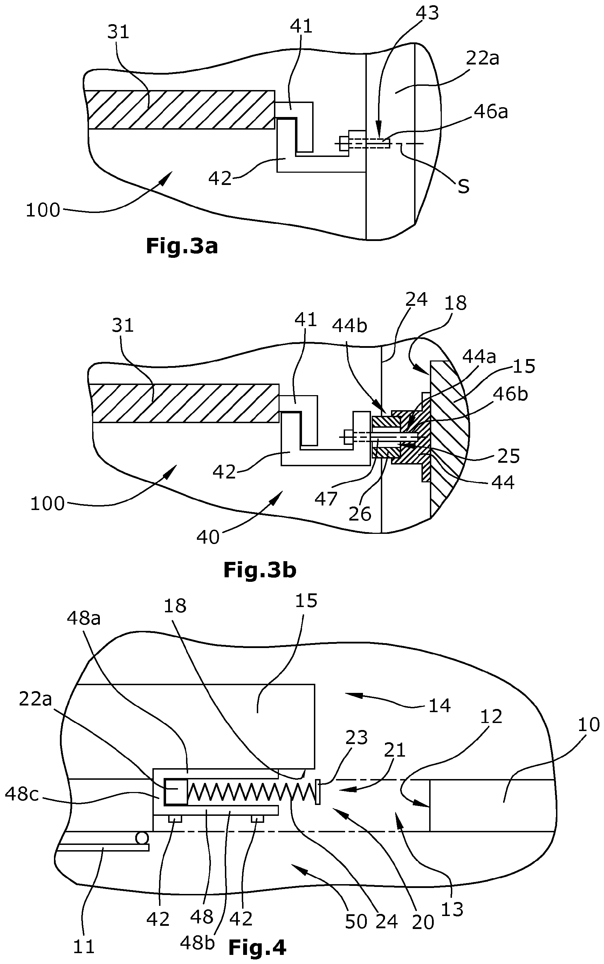

In den Figuren 3a und 3b ist jeweils einen Ausschnitt einer Schnittansicht der Befestigungsvorrichtung 40 gezeigt, so dass die einzelnen Kupplungsglieder 26, 41, 42, 43, 44, 45, 46a, 46b der Befestigungsvorrichtung 40 erkennbar sind. Die Befestigungsvorrichtung 40 weist insbesondere ein an dem Tisch 30 angeordnetes Tisch-Kupplungsglied 41 und zumindest ein fahrzeugseitig angeordnetes Fahrzeug-Kupplungsglied 26, 42, 43, 44, 45, 46a, 46b auf, wobei die Kupplungsglieder 26, 41, 42, 43, 44, 45, 46a, 46b in der gezeigten Anordnung wiederlösbar miteinander kuppelbar sind.

In der Figur 3a sind die in einem Seitenbereich der Fahrzeugöffnung 13, insbesondere im Bereich der Rahmenleiste 22a, angeordneten Kupplungsglieder 41, 42, 43, 46a der Befestigungsvorrichtung 40 gezeigt. Hierbei ist das an dem Tisch 30 dauerhaft befestigte Tisch-Kupplungsglied 41 als ein Hakenelement ausgebildet, welches in ein als eine Tragschiene bzw. Konsole ausgebildetes Fahrzeug-Kupplungsglied 42 von oben eingehängt ist. Dazu ist die Tragschiene 42 vorteilhafterweise auf der zur Fahrzeugumgebung 50 zugewandten Seite des Zwischenraums 16 angeordnet und weist im Querschnitt ein U-Profil mit einer nach oben gerichteten Öffnung auf. Die Tragschiene 42 ist als ein Zwischen-Kupplungsglied zwischen zwei Kupplungsgliedern, nämlich zwischen dem Tisch-Kupplungsglied 41 und den Aufnahmeelementen 43, 44, angeordnet und in dem in Figur 3a gezeigten Bereich über ein Bolzenelement 46a an der Rahmenleiste 22a um eine Schwenkachse S schwenkbar gelagert. Dazu ist das Bolzenelement 46a in eine an der Rahmenleiste 22a ausgebildete Aufnahmeöffnung 43 gekuppelt. Das Bolzenelement 46a kann beispielsweise eine Schraube und die Aufnahmeöffnung 43 eine Bohrung mit Gewinde sein. Dadurch kann die Tragschiene 42 beispielsweise aus einer nicht gezeigten ersten, insbesondere vertikalen Position in eine zweite, insbesondere horizontale Position geschwenkt werden. Die erste Position dient zum Verstauen der Tragschiene 42 und Freigeben der Fahrzeugöffnung 13, wenn die Fahrzeugtür 11 geschlossen werden soll. Die zweite Position dient zum Einhängen des Tisch-Kupplungsglieds 41 bei geöffneter Fahrzeugtür 11, so dass der Tisch 30 in relativ einfacher und komfortabler Weise mit dem Kraftfahrzeug 10 gekuppelt werden kann.

In der Figur 3b sind die in einem relativen Mittenbereich der Fahrzeugöffnung 13 angeordneten Kupplungsglieder 26, 41, 42, 44, 46b der Befestigungsvorrichtung 40 gezeigt. Hierbei ist ebenfalls das Tisch Kupplungsglied 41 in der Tragschiene 42 eingehängt. Die Tragschiene 42 ist über ein Bolzenelement 46b mit einem als Aufnahmeelement ausgebildeten Fahrzeug-Kupplungsglied 44 gekuppelt, wobei das Aufnahmeelement 44 an der Rückwand 18 des Küchenunterschranks 15 befestigt ist. Das Bolzenelement 46b ist vorliegend als ein Bolzen mit einer umlaufenden Nut zur Kupplung in dem Aufnahmeabschnitt 44a des Aufnahmeelements 44 ausgebildet sein. Das Bolzenelement 46b erstreckt sich dabei mit einem Abschnitt 47 durch eine Durchlassöffnung 25 eines Hülsenelements 26 bis in das Aufnahmeelement 44.

Das Hülsenelement 26 ist als ein separates Zwischen-Kupplungsglied ausgebildet, welches an dem Insektenschutzgitter 24 dauerhaft befestigt und zwischen zwei Kupplungsgliedern 42, 44 angeordnet ist, nämlich zwischen der Tragschiene 42 und dem Aufnahmeelement 44. Das Hülsenelement 26 bildet eine formsteife Durchlassöffnung 25 für das Bolzenelement 46b und ist vorteilhafterweise in demjenigen Bereich des Insektenschutzgitters 24 angeordnet, der bei vollständig aufgezogenem Insektenschutzgitter 24 im Bereich des Aufnahmeelements 44 angeordnet ist. Es ist vorgesehen, dass das Hülsenelement 46 insbesondere ein ferromagnetisches Material und das Aufnahmeelement 44 einen Magneten aufweist, so dass das Hülsenelement 26 beim Aufziehen des Insektenschutzgitters 24 vor die Fahrzeugöffnung 13 von dem Aufnahmeelement 44 magnetisch angezogen wird und in den Aufnahmeabschnitt 44b automatisch eingekuppelt wird. Der Aufnahmeabschnitt 44b und Aufnahmeabschnitt 44a sind vorteilhafterweise koaxial zueinander ausgebildet.

Folglich kann nach einem zumindest teilweise Aufziehen des als Insektenschutztür 21 ausgebildeten Insektenschutzgitters 24 durch Verschieben der Griffleiste 23 das Hülsenelement 26 durch die von dem Aufnahmeelement 44 erzeugte Magnetkraft in den Aufnahmeabschnitt 44b automatisch eingekuppelt werden, die Tragschiene 42 aus der vertikalen Verstau-Position in eine horizontale Konsolenposition um die Schwenkachse geschwenkt werden, das an der Tragschiene 42 freibewegbare Bolzenelement 46b durch die Durchlassöffnung 25 des Hülsenelements 26 bis in den Aufnahmeabschnitt 44a eingeführt und mit dem Aufnahmeelement 44 gekuppelt werden, und der Tisch 30 mit dem an der Tischplatte 31 angeordneten Tisch-Kupplungsglied 41 in die Tragschiene 42 eingehängt werden. Durch die Anordnung der beiden Bolzenelemente 46a, 46b sind für die Tragschiene 42 vorliegend zwei Auflager gebildet, die einer stabilen und wackelfreien Befestigung des Tisches 30 an dem Kraftfahrzeug 10 dienen.

Zum Lösen des Tisches 30 von dem Kraftfahrzeug 10 und/oder Schließen der Fahrzeugtür 21 kann die zuvor beschriebene Abfolge in umgekehrter Reihenfolge erfolgen, wobei das Hülsenelement 26 beim Vorbeiziehen der Griffleiste 23 von der Griffleiste 23 aus dem Aufnahmeabschnitt 44b automatisch herausgelöst wird und sodann entsprechend der Faltung des Insektenschutzgitters 24 ausgerichtet und mit dem gefalteten Insektenschutzgitter 24 in einem in der Rahmenleiste 22a ausgebildeten und nicht näher dargestellten Schutzkasten verstaut wird.

In der Figur 4 ist eine alternative Ausgestaltung der Befestigungsvorrichtung 40 gezeigt. Hierbei ist ein Fahrzeug-Kupplungsglied 48 vorgesehen, das als ein zusammenhängender Träger bzw. eine zusammenhängende Balkenstruktur ausgebildet ist. Der Träger 48 weist in der Draufsicht insbesondere eine U-Form mit zwei im Wesentlichen parallelen Schenkeln 48a, 48b und einer die Schenkel 48a, 48b verbindenden Basis 48c auf. Die Höhe des Trägers 48, das heißt die vertikale Erstreckung, entspricht im Wesentlichen der Höhe der zuvor in den Figuren 1 bis 3b angeordneten Tragschiene 42. Der Träger 48 umgibt das Insektenschutzgitter 24 vorliegend mit drei Seiten, nämlich mit den beiden Schenkeln 48a, 48b und der Basis 48c. Der erste Schenkel 48a ist auf der dem Fahrzeuginnenraum 14 zugewandten Seite des Insektenschutzgitters 24 angeordnet und an der Rückwand 18 des Fahrzeugsinnenraummöbels 15 befestigt. Der zweite Schenkel 48b befindet sich auf der zur Fahrzeugumgebung 50 zugewandten Seite des Insektenschutzgitters 24 und ist bevorzugt mit seinem freien Ende freischwebend angeordnet. An dem zweite Schenkel 48b sind vorliegend zwei Fahrzeug-Kupplungsglieder 42 zum Einhängen des Tischkupplungsglieds 41 angeordnet. Die den ersten Schenkel 48a und den zweiten Schenkel 48b verbindende Basis 48c ist im Bereich des Fahrzeugtürrahmens 12 an der Stirnseite des Insektenschutzgitters 24 angeordnet. Die Rahmenleiste 22a der Insektenschutzeinrichtung 20 kann hierbei in die Öffnung des U-förmigen Trägers 28 eingesetzt sein. Bei dieser Ausgestaltung ist der Träger 48 nicht wegklappbar, sondern bleibt in der beschriebenen Position dauerhaft angeordnet. Eine solche Ausgestaltung ist daher nur bei solchen Fahrzeugmodellen möglich, bei denen im Bereich der Fahrzeugöffnung 13 auch bei geschlossener Fahrzeugtür 21 ein ausreichender Platz für den Träger 48 zur Verfügung gestellt ist. Zur besseren Anschaulichkeit ist in der Figur 4 der Tisch 30 mit dem Tisch-Kupplungsglied 41 nicht dargestellt.

Es sollte deutlich sein, dass der Hauptanspruch nicht auf die vorliegend beschriebenen Ausführungsbeispiele begrenzt ist. Wie bereits erwähnt ist insbesondere eine Anpassung der Kupplungsglieder an die Ausgestaltung der Fahrzeugöffnung, Fahrzeuginnenraummöbel und/oder Insektenschutzeinrichtung für den Fachmann selbstverständlich. Entsprechend können sowohl die Anzahl als auch die Ausgestaltung der Kupplungsglieder variieren. Ferner können Kupplungsanordnungen, wie die magnetische Ausgestaltung zum automatischen Anziehen eines korrespondierenden Bauteils, auch einander umgekehrt angeordnet sein.

### Bezugszeichenliste

- 10: Kraftfahrzeug
- 11: Fahrzeugtür
- 12: Fahrzeugtürrahmen
- 13: Fahrzeugöffnung
- 14: Fahrzeuginnenraum
- 15: Fahrzeuginnenraummöbel
- 16: Zwischenraum
- 17: Fahrzeuginnenraummöbel
- 18: Rückwand

- 20: Insektenschutzeinrichtung
- 21: Insektenschutztür
- 22: Insektenschutzrahmen
- 22a: Rahmenstrebe
- 22b: Rahmenstrebe, Führungsschiene
- 22c: Rahmenstrebe
- 22d: Rahmenstrebe, Führungsschiene
- 23: Griffleiste
- 24: Insektenschutznetz, -gitter
- 26: Kupplungsglied, Hülsenelement
- 25: Öffnung
- 27: Verschieberichtung

- 30: Tisch
- 31: Tischplatte
- 32: Tischbein

- 40: Befestigungsvorrichtung
- 41: Tisch-Kupplungsglied
- 42: Fahrzeug-Kupplungsglied, Tragschiene
- 43: Fahrzeug-Kupplungsglied, Aufnahmeelement
- 44: Fahrzeug-Kupplungsglied, Aufnahmeelement
- 44a: Hülsen-Aufnahmeabschnitt
- 44b: Bolzen-Aufnahmeabschnitt
- 45: Fahrzeug-Kupplungsglied für Innenraumposition
- 46a: Bolzenelement, Bolzen
- 46b: Bolzenelement, Bolzen
- 47: Abschnitt, der sich durch Netz erstreckt
- 48: Kupplungsglied, Träger
- 48a: Schenkel
- 48b: Schenkel
- 48c: Basis

- 50: Fahrzeugumgebung
- 51: Bereich Fahrzeugöffnung
- 100: gekuppelter Zustand
- S: Schwenkachse

## Patentansprüche

1. Bewohnbares Kraftfahrzeug (10) mit
- einem bewohnbaren Fahrzeuginnenraum (14),
- einer Fahrzeugöffnung (13), die zwischen dem Fahrzeuginnenraum (14) und einer Fahrzeugumgebung (50) ausgebildet ist und mittels einer Fahrzeugtür (11) verschließbar ist,
- einer Insektenschutzeinrichtung (20), die an dem Kraftfahrzeug (10) befestigt ist und ein Insektenschutzgitter (24) aufweist, mit dem die Fahrzeugöffnung (13) zumindest teilweise verschließbar ist, und
- einer Befestigungsvorrichtung (40) zum wiederlösbaren Befestigen eines Tisches (30) an dem Kraftfahrzeug (10), wobei
∘ die Befestigungsvorrichtung (40) ein an dem Tisch (30) angeordnetes Tisch-Kupplungsglied (41) und zumindest ein fahrzeugseitig angeordnetes Fahrzeug-Kupplungsglied (26, 42, 43, 44, 45, 46a, 46b) aufweist,
∘ die Kupplungsglieder (41, 26, 42, 43, 44, 45, 46a, 46b) wiederlösbar miteinander kuppelbar sind, und
∘ das Fahrzeug-Kupplungsglied (26, 42, 43, 44, 45, 46a, 46b) in einem Bereich (51) der Fahrzeugöffnung (13) derart an dem Kraftfahrzeug (10) angeordnet ist, dass der Tisch (30) in einem gekuppelten Zustand (100) der Kupplungsglieder (26, 41, 42, 43, 44, 45, 46a, 46b) sich von der Fahrzeugöffnung (13) lateral in die Fahrzeugumgebung (50) erstreckt,
wobei zumindest eines der Kupplungsglieder (26, 41, 42, 43, 44, 45, 46a, 46b) derart ausgebildet ist, dass im gekuppelten Zustand (100) der Kupplungsglieder (26, 41, 42, 43, 44, 45, 46a, 46b) zwischen dem Tisch (30) und dem Fahrzeuginnenraum (14) ein Zwischenraum (16) ausgebildet ist, in dem das Insektenschutzgitter (24) angeordnet ist.

2. Bewohnbares Kraftfahrzeug (10) nach Anspruch 1, **dadurch gekennzeichnet, dass**
der Tisch (30) im gekuppelten Zustand (100) der Kupplungsglieder (26, 41, 42, 43, 44, 45, 46a, 46b) an einem in dem Fahrzeuginnenraum (14) angeordneten Fahrzeuginnenraummöbel (15) befestigt ist, und der Zwischenraum (16) zwischen dem Fahrzeuginnenraummöbel (15) und dem Tisch (30) ausgebildet ist.

3. Bewohnbares Kraftfahrzeug (10) nach einem der Ansprüche 1 oder 2, **dadurch gekennzeichnet, dass**
zumindest ein Kupplungsglied (41, 46a, 46b) als ein Bolzenelement und zumindest ein anderes Kupplungsglied (43, 44, 45) als ein Aufnahmeelement zur Aufnahme zumindest des Bolzenelements (46a, 46b) ausgebildet ist.

4. Bewohnbares Kraftfahrzeug (10) nach Anspruch 3, **dadurch gekennzeichnet, dass**
das Bolzenelement (41, 46a, 46b) sich durch eine an dem Insektenschutzgitter (24), an einem Insektenschutzrahmen (12) oder an einer Griffleiste (23) der Insektenschutzeinrichtung (20) angeordnete Durchlassöffnung (25) erstreckt.

5. Bewohnbares Kraftfahrzeug (10) nach Anspruch 4, **dadurch gekennzeichnet, dass**
die Durchlassöffnung (25) durch ein separates Hülsenelement (26) gebildet ist, das an dem Insektenschutzgitter (24) befestigt ist,

6. Bewohnbares Kraftfahrzeug (10) nach einem der Ansprüche 3 bis 5, **dadurch gekennzeichnet, dass**
das Aufnahmeelement (43, 44, 45) einen ersten Aufnahmeabschnitt (44a) zur Aufnahme des Bolzenelements (46a, 46b) und/oder einen zweiten Aufnahmeabschnitt (44b) zur Aufnahme des Hülsenelements (26) aufweist.

7. Bewohnbares Kraftfahrzeug (10) nach einem der Ansprüche 5 oder 6, **dadurch gekennzeichnet, dass**
das Aufnahmeelement (43, 44, 45) einen Magneten aufweist und das Hülsenelement (26) ferromagnetisch ist.

8. Bewohnbares Kraftfahrzeug (10) nach einem der voranstehenden Ansprüche, **dadurch gekennzeichnet, dass**
zumindest ein Fahrzeug-Kupplungsglied (26, 42, 46a, 46b) als ein separat ausgebildetes Zwischen-Kupplungsglied (26, 42, 46a, 46b) ausgebildet ist, das als eine Schnittstelle zwischen einem ersten Kupplungsglied (41, 46a, 46b) und einem zweiten Kupplungsglied (26, 42, 43, 44, 45) angeordnet ist.

9. Bewohnbares Kraftfahrzeug (10) nach Anspruch 8, **dadurch gekennzeichnet, dass**
das Zwischen-Kupplungsglied (42) als eine Tragschiene ausgebildet ist, in die das Tisch-Kupplungsglied (41) mit zumindest einem Einhängeelement einhängbar ist.

10. Bewohnbares Kraftfahrzeug (10) nach einem der Ansprüche 8 oder 9, **dadurch gekennzeichnet, dass**
das Zwischen-Kupplungsglied (42) um eine Schwenkachse (S) schwenkbar gelagert ist.

11. Bewohnbares Kraftfahrzeug (10) nach einem der Ansprüche 8 bis 10, **dadurch gekennzeichnet, dass**
das Zwischen-Kupplungsglied (42) auf der zur Fahrzeugumgebung (50) zugewandten Seite des Zwischenraums (16) angeordnet ist.

12. Bewohnbares Kraftfahrzeug (10) nach einem der voranstehenden Ansprüche, **dadurch gekennzeichnet, dass**
das Zwischen-Kupplungsglied (42) und/oder das Fahrzeug-Kupplungsglied (42, 48) U-förmig ausgebildet ist.

13. Bewohnbares Kraftfahrzeug (10) nach einem der voranstehenden Ansprüche, **dadurch gekennzeichnet, dass**
die Insektenschutzeinrichtung (20) einen das Insektenschutzgitter (24) umgebenden Insektenschutzrahmen (22) aufweist, der an einem die Fahrzeugöffnung (13) umgebenden Fahrzeugtürrahmen (12) befestigt ist.

14. Bewohnbares Kraftfahrzeug (10) nach einem der voranstehenden Ansprüche, **dadurch gekennzeichnet, dass**
die Insektenschutzeinrichtung (20) eine Insektenschutztür (21) aufweist, mit der die Fahrzeugöffnung (13) bedarfsweise verschließbar ist.

15. Bewohnbares Kraftfahrzeug (10) nach einem der voranstehenden Ansprüche, **dadurch gekennzeichnet, dass**
die Insektenschutzeinrichtung (20) zum Aufziehen oder Einschieben (27) des Insektenschutzgitters (24) zumindest eine in einer Führungsschiene (22b, 22d) verschiebbar gelagerte Griffleiste (23) aufweist.

16. Bewohnbares Kraftfahrzeug (10) nach Anspruch 15, **dadurch gekennzeichnet, dass**
das Insektenschutzgitter (24) faltbar ausgebildet ist, und bei Verschieben der Griffleiste (23) automatisch zusammengefaltet oder entfaltet wird.

17. Bewohnbares Kraftfahrzeug (10) nach einem der voranstehenden Ansprüche, **dadurch gekennzeichnet, dass**
das Insektenschutzgitter (24) sich über die gesamte Fahrzeugöffnung (13) erstreckt.

18. Bewohnbares Kraftfahrzeug (10) nach einem der voranstehenden Ansprüche, **dadurch gekennzeichnet, dass**
der Tisch (30) als ein Fahrzeuginnenraummöbel (17) ausgebildet ist, der an einem zusätzlichen Fahrzeug-Kupplungsglied (45) innerhalb des Fahrzeuginnenraums (14) anordenbar und befestigbar ist.

19. Verfahren zum wiederlösbaren Befestigen eines Tisches (30) an einem bewohnbaren Kraftfahrzeug (10) **mit den folgenden Schritten:**
- Öffnen einer Fahrzeugtür (11) zum Freilegen einer Fahrzeugöffnung (13) zwischen einem Fahrzeuginnenraum (14) und einer Fahrzeugumgebung (50),
- Schließen zumindest eines Teilbereichs (51) der Fahrzeugöffnung (13) durch Anordnen eines Insektenschutzgitters (24) einer Insektenschutzeinrichtung (20), wobei während des Schließens, insbesondere bei einem Vorbeiziehen (27) des Insektenschutzgitters (24) an einem an einem Fahrzeuginnenraummöbel (15) angeordneten Fahrzeug-Kupplungsglied (44), ein an dem Insektenschutzgitter (24) angeordnetes Hülsenelement (26) von dem Fahrzeug-Kupplungsglied (44) automatisch magnetisch angezogen und mit dem Fahrzeug-Kupplungsglied (44) gekuppelt wird,
- Schwenken eines als eine Tragschiene ausgebildeten Zwischen-Kupplungsglieds (42) aus einer vertikalen Ausrichtung in eine horizontale Ausrichtung,
- Durchführen eines an dem Zwischen-Kupplungsglieds (42) beweglich gelagerten Bolzenelements (46b) durch das Hülsenelement (26) in das Fahrzeug-Kupplungsglied (44),
- Einhängen des Tisches (30) mit einem Tisch-Kupplungsglied (41) auf das Zwischen-Kupplungsglied (42).

## Claims

1. A habitable motor vehicle (10), comprising
- a habitable vehicle interior (14),
- a vehicle opening (13) which is formed between the vehicle interior (14) and ambience (50) of the vehicle and is closeable by a vehicle door (11),
- an insect protection device (20) which is fastened to the motor vehicle (10) and comprises an insect protection screen (24) adapted to at least partially close the vehicle opening (13), and
- a fastening device (40) for releasably fastening a table (30) to the motor vehicle (10),
- wherein said fastening device (40) comprises a table coupling member (41) arranged on the table (30) and at least one vehicle coupling member (26,42,43,44,45,46a,46b) arranged on the vehicle side,
- and the coupling members (41,26,42,43,44,45,46a,46b) can be releasably coupled to each other,
- wherein the vehicle coupling member (26,42,43,44,45,46a,46b) in a region (51) of the vehicle opening (13) is arranged on the motor vehicle (10) in such a manner that, in a coupled state (100) of the coupling members (26,41,42,43,44,45,46a,46b), the table (30) extends from the vehicle opening (13) laterally into the ambience (50) of the vehicle,
wherein at least one of the coupling members (26,41,42,43,44,45,46a,46b) is designed in such a manner that, in the coupled state (100) of the coupling members (26,41,42,43,44,45,46a,46b), an intermediate space (16) is formed between the table (30) and the vehicle interior (14), said intermediate space (16) having the insect protection screen (24) arranged in it.

2. The habitable motor vehicle (10) of claim 1, **characterized in that,** in the coupled state (100) of the coupling members (26,41,42,43,44, 45,46a,46b), the table (30) is fastened to a vehicle-interior furniture item (15) arranged in the vehicle interior (14), and said intermediate space (16) is formed between the vehicle-interior furniture item (15) and the table (30).

3. The habitable motor vehicle (10) of claim 1 or 2, **characterized in that** at least one coupling member (41,46a,46b) is designed as a bolt element and at least one further coupling member (43,44,45) is designed as a receiving element for receiving at least the bolt element (46a, 46b).

4. The habitable motor vehicle (10) of claim 3, **characterized in that** the bolt element (41,46a,46b) extends through a through opening (25) arranged on the insect protection screen (24), on an insect protection frame (12) or on a grip bar (23) of the insect protection device (20).

5. The habitable motor vehicle (10) of claim 4, **characterized in that** the through opening (25) is formed by a separate sleeve element (26) fastened to the insect protection screen (24).

6. The habitable motor vehicle (10) of any one of claims 3 to 5, **characterized in that**
the receiving element (43,44,45) comprises a first receiving section (44a) for receiving the bolt element (46a,46b) and/or a second receiving section (44b) for receiving the sleeve element (26).

7. The habitable motor vehicle (10) of claim 5 or 6, **characterized in that** the receiving element (43,44,45) comprises a magnet and the sleeve element (26) is ferromagnetic.

8. The habitable motor vehicle (10) of any one of the preceding claims, **characterized in that**
at least one vehicle coupling member (26,42,46a,46b) is designed as a separate intermediate coupling member (26,42,46a,46b) which is arranged as an interface between a first coupling member (41,46a,46b) and a second coupling member (26,42,43,44,45).

9. The habitable motor vehicle (10) of claim 8, **characterized in that** the intermediate coupling member (42) is designed as a support rail adapted for hooking attachment of the table coupling member (41) by at least one hooking element.

10. The habitable motor vehicle (10) of claim 8 or 9, **characterized in that** the intermediate coupling member (42) is supported to be pivoted about a pivot axis (S).

11. The habitable motor vehicle (10) of any one of claims 8 to 10, **characterized in that**
the intermediate coupling member (42) is arranged on the side of the intermediate space (16) facing toward the ambience (50) of the vehicle.

12. The habitable motor vehicle (10) of any one of the preceding claims, **characterized in that**
the intermediate coupling member (42) and/or the vehicle coupling member (42,48) are U-shaped.

13. The habitable motor vehicle (10) of any one of the preceding claims, **characterized in that**
the insect protection device (20) comprises an insect protection frame (22) which surrounds the insect protection screen (24) and is fastened to a vehicle door frame (12) surrounding the vehicle opening (13).

14. The habitable motor vehicle (10) of any one of the preceding claims, **characterized in that**
the insect protection device (20) comprises an insect protection door (21) adapted to close the vehicle opening (13), when required.

15. The habitable motor vehicle (10) of any one of the preceding claims, **characterized in that**
the insect protection device (20), for clamping into place or inserting (27) the insect protection screen (24), comprises at least one grip bar (23) displaceably arranged in a guide rail (22b,22d).

16. The habitable motor vehicle (10) of claim 15, **characterized in that** the insect protection screen (24) is foldable and upon displacement of the grip bar (23) is automatically folded together or unfolded.

17. The habitable motor vehicle (10) of any one of the preceding claims, **characterized in that**
the insect protection screen (24) extends across the entire vehicle opening (13).

18. The habitable motor vehicle (10) of any one of the preceding claims, **characterized in that**
the table (30) is designed as a vehicle-interior furniture item (17) adapted to be arranged on, and fastened to, an additional vehicle coupling member (45) within the vehicle interior (14).

19. A method for releasably fastening a table (30) to a habitable motor vehicle (10), **comprising the following steps:**
- opening a vehicle door (11) for clearing a vehicle opening (13) between a vehicle interior (14) and an ambience (50) of the vehicle,
- closing at least a partial region (51) of the vehicle opening (13) by placement of an insect protection screen (24) of an insect protection device (20), wherein, in the closing process, particularly while an insect protection screen (24) is pulled (27) past a vehicle coupling member (44) arranged on a vehicle-interior furniture item (15), a sleeve element (26) arranged on the insect protection screen (24) is automatically magnetically attracted by the vehicle coupling member (44) and is coupled to the vehicle coupling member (44),
- pivoting an intermediate coupling member (42) designed as a support rail from a vertical orientation into a horizontal orientation,
- passing a bolt element (46b) moveably supported on the intermediate coupling member (42) through the sleeve element (26) into the vehicle coupling member (44),
- hanging the table (30) by means of a table coupling member (41) onto the intermediate coupling member (42).

## Revendications

1. Véhicule automobile habitable (10), avec
- un habitacle de véhicule automobile (14) habitable,
- une ouverture de véhicule (13) formée entre l'habitacle du véhicule (14) et un environnement de véhicule (50) et fermable par une porte de véhicule (11),
- un dispositif de protection contre les insectes (20) fixé au véhicule automobile (10) et comprenant un écran de protection contre les insectes (24) par lequel l'ouverture du véhicule (13) peut être fermée au moins partiellement, et
- un dispositif de fixation (40) pour fixer de manière détachable une table (30) au véhicule automobile (10), dans lequel
- le dispositif de fixation (40) comprend un organe d'accouplement de la table (41) disposé à la table (30) et au moins un organe d'accouplement (26, 42, 43, 44, 45, 46a, 46b), côté véhicule,
- les organes d'accouplement (41, 26, 42, 43, 44, 45, 46a, 46b) sont accouplés l'un à l'autre de manière détachable, et
- l'organe d'accouplement (26, 42, 43, 44, 45, 46a, 46b), côté véhicule, est disposée sur le véhicule automobile (10) dans une région (51) de l'ouverture du véhicule (13) de sorte que, dans un état couplé (100) des organes d'accouplement (26, 41, 42, 43, 44, 45, 46 a, 46 b), la table (30) s'étend latéralement depuis l'ouverture du véhicule (13) dans l'environnement du véhicule (50),
dans lequel au moins l'un des organes d'accouplement (26, 41, 42, 43, 44, 45, 46a, 46b) est formé de telle sorte que, dans l'état couplé (100) des organes d'accouplement (26, 41, 42, 43, 44, 45, 46a, 46b), un espace (16) est formé entre la table (30) et l'intérieur du véhicule (14), dans lequel l'écran de protection contre les insectes (24) est disposé.

2. Véhicule automobile habitable (10) selon la revendication 1, **caractérisé en ce que** dans l'état couplé (100) des organes d'accouplement (26, 41, 42, 43, 44, 45, 46a, 46b), la table (30) est montée à un mobilier intérieur de véhicule (15) disposé à l'intérieur du véhicule (14), et l'espace (16) est formé entre le mobilier d'intérieur de véhicule (15) et la table (30).

3. Véhicule automobile habitable (10) selon l'une des revendications 1 ou 2, **caractérisé en ce qu'**au moins un organe d'accouplement (41, 46a, 46b) est conçu comme organe de boulon et au moins un autre organe d'accouplement (43, 44, 45) est conçu comme organe de logement pour recevoir au moins l'organe de boulon (46a, 46b).

4. Véhicule automobile habitable (10) selon la revendication 3, **caractérisé en ce que** l'organe de boulon (41, 46a, 46b) s'étend à travers une ouverture de passage (25) formée dans un écran de protection contre les insectes (24), un cadre de protection contre les insectes (12) ou une poignée (23) du dispositif de protection contre les insectes (20).

5. Véhicule automobile habitable (10) selon la revendication 4, **caractérisé en ce que** l'ouverture de passage (25) est formée par un élément de manchon séparé (26) fixé à l'écran de protection contre les insectes (24).

6. Véhicule automobile habitable (10) selon l'une des revendications 3 à 5, **caractérisé en ce que** l'organe de logement (43, 44, 45) présente une première partie de logement (44a) destinée à recevoir l'organe de boulon (46a, 46b) et/ou une deuxième partie de logement (44b) pour recevoir l'élément de manchon (26).

7. Véhicule automobile habitable (10) selon l'une des revendications 5 ou 6, **caractérisé en ce que** l'organe de logement (43, 44, 45) comprend un aimant et l'élément de manchon (26) est ferromagnétique.

8. Véhicule automobile habitable (10) selon l'une quelconque des revendications précédentes, **caractérisé en ce qu'**au moins un organe d'accouplement (26, 42, 46a, 46b), côté véhicule, est formé comme organe d'accouplement intermédiaire (26, 42, 46a, 46b) formé séparément, ledit organe étant disposé comme une interface entre un premier organe d'accouplement (41, 46a, 46b) et un second organe d'accouplement (26, 42, 43, 44, 45).

9. Véhicule automobile habitable (10) selon la revendication 8, **caractérisé en ce que** l'organe d'accouplement intermédiaire (42) est conçu comme un rail de support, dans lequel l'organe d'accouplement (41), côté table, peut être suspendu par au moins un organe de suspension.

10. Véhicule automobile habitable (10) selon l'une des revendications 8 ou 9, **caractérisé en ce que** l'organe d'accouplement intermédiaire (42) est supporté pivotant autour d'un axe de pivotement (S).

11. Véhicule automobile habitable (10) selon l'une des revendications 8 à 10, **caractérisé en ce que** l'organe d'accouplement intermédiaire (42) est disposé sur le côté de l'espace (16) orienté vers l'environnement du véhicule (50).

12. Véhicule automobile habitable (10) selon l'une quelconque des revendications précédentes, **caractérisé en ce que** l'organe d'accouplement intermédiaire (42) et/ou l'organe de couplage de véhicule (42, 48) est en forme de U.

13. Véhicule automobile habitable (10) selon l'une quelconque des revendications précédentes, **caractérisé en ce que** le dispositif de protection contre les insectes (20) comporte un cadre de protection contre les insectes (22) entourant un écran de protection contre les insectes (24), le cadre étant fixé à une ouverture de véhicule (13) entourant le cadre de porte du véhicule (12).

14. Véhicule à moteur habitable (10) selon l'une quelconque des revendications précédentes, **caractérisé en ce que** le dispositif de protection contre les insectes (20) comporte une porte de protection contre les insectes (21) avec laquelle l'ouverture du véhicule (13) peut être fermée selon les besoins.

15. Véhicule automobile habitable (10) selon l'une quelconque des revendications précédentes, **caractérisé en ce que** pour ouvrir ou fermer (27) de l'écran de protection contre les insectes (24), le dispositif de protection contre les insectes (20) comprend au moins une poignée (23) supportée de manière coulissante dans un rail de guidage (22b, 22d).

16. Véhicule automobile habitable (10) selon la revendication 15, **caractérisé en ce que** l'écran de protection contre les insectes (24) est pliable et que, lors du déplacement de la poignée (23), l'écran est automatiquement plié ou déplié.

17. Véhicule automobile habitable (10) selon l'une quelconque des revendications précédentes, **caractérisé en ce que** l'écran de protection contre les insectes (24) s'étend sur toute l'ouverture du véhicule (13).

18. Véhicule automobile habitable (10) selon l'une quelconque des revendications précédentes, **caractérisé en ce que** la table (30) est conçue comme meuble d'intérieur de véhicule (17) pouvant être agencée et fixée à un organe d'accouplement de véhicule (45) supplémentaire à l'intérieur de l'habitacle de véhicule (14).

19. Procédé de fixation détachable d'une table (30) à un véhicule automobile habitable (10) comprenant les étapes suivantes:
- ouvrir une porte de véhicule (11) pour exposer une ouverture de véhicule (13) entre un habitacle de véhicule (14) et un environnement de véhicule (50),
- fermer au moins une partie (51) de l'ouverture de véhicule (13) par disposer un écran de protection contre les insectes (24) d'un dispositif de protection contre les insectes (20), dans lequel, pendant la fermeture, en particulier lors du passage (27) de l'écran de protection contre les insectes (24) par un organe d'accouplement (44), côté véhicule, disposé à un meuble d'intérieur de véhicule (17), un organe de manchon (26) disposé sur l'écran de protection contre les insectes (24) est automatiquement attiré magnétiquement par l'organe d'accouplement (44), côté véhicule, et est couplé à l'organe d'accouplement (44), côté véhicule,
- faisant pivoter un organe d'accouplement intermédiaire (42), conçu comme rail de support, d'une orientation verticale à une orientation horizontale,
- passer un organe de boulon (46b), supporté de manière mobile sur l'organe d'accouplement intermédiaire (42), à travers l'organe de manchon (26) dans l'organe d'accouplement (44), côté véhicule,
- accrocher la table (30) sur l'organe d'accouplement intermédiaire (42) par un organe d'accouplement (41), côté table.
